# EUROPÄISCHE PATENTANMELDUNG

(11) **EP 0 620 422 A1**
(43) Veröffentlichungstag der Anmeldung: **19.10.1994**
(21) Anmeldenummer: 94104549.4
(22) Anmeldetag: 23.03.1994
(51) Int. Cl.: G01G 19/34, G01G 13/24

(54) **Verfahren und Vorrichtung zur gravimetrischen Dosierung und Vermischung mindestens zweier Komponenten**

(30) Priorität: 15.04.1993 DE 4312281
(71) Anmelder: MASCHINENFABRIK GUSTAV EIRICH, D-74736 Hardheim (DE)
(72) Erfinder: Diem, Winfried, D-68239 Mannheim (DE)
(74) Vertreter: Weber, Dieter, Dr.

(57) **Zusammenfassung**

Die vorliegende Erfindung betrifft ein Verfahren und eine Vorrichtung zur gravimetrischen Dosierung und Vermischung mindestens zweier Komponenten (K1, K2), bei welchem die Gewichtsanteile der Komponenten (K1, K2) durch Wägen erfaßt und beide Komponenten (K1, K2) in einem Behälter (21) miteinander vermischt werden. Um ein Verfahren und eine Vorrichtung bereitzustellen, mit welchen es möglich ist, auch schwierig zu vermischende Komponenten in genauer Dosierung gleichmäßig und ohne übermäßig lange Mischvorgänge miteinander zu vermengen, wird erfindungsgemäß vorgeschlagen, daß eine erste Komponente (K1) in einen ersten Wägebehälter (11) gegeben wird, daß eine zweite Komponente während eines vorgebbaren Zeitraumes kontinuierlich in einen zweiten Wägebehälter (21) gegeben wird, während zumindest abschnittsweise gleichzeitig die erste Komponente (K1) aus dem ersten Wägebehälter (11) kontinuierlich in den zweiten Wägebehälter (21) überführt wird, welcher die Summe der Gewichte der ersten und der zweiten Komponenten (K1, K2) aufnimmt, wobei sich aus der Gewichtsabnahme des Inhalts des ersten Wägebehälters (11) und der Summe der Gewichte der beiden Komponenten (K1, K2) in dem zweiten Wägebehälter (21) die relativen Anteile der ersten und zweiten Komponenten (K1, K2) in dem zweiten Wägebehälter (21) ergeben, wobei dementsprechend für die Vorrichtung zwei Wägebehälter (11, 21) vorgesehen sind, von denen einer mit einer Austragseinrichtung (13) versehen ist, die dem anderen Wägebehälter (21) die Komponente (K1) aus dem ersten Wägebehälter zuführt und die als Dosiereinrichtung ausgebildet ist, wobei auch die weitere Zufuhreinrichtung (25) für den zweiten Wägebehälter (21) als Dosiereinrichtung ausgebildet ist.

## Beschreibung

Die vorliegende Erfindung betrifft ein Verfahren und eine Vorrichtung zur gravimetrischen Dosierung und Vermischung mindestens zweier Komponenten, bei welchen die Gewichtsanteile der Komponenten durch Wägen erfaßt und beide Komponenten in einem gemeinsamen Behälter miteinander vermischt werden. Dabei hat eine entsprechende Vorrichtung mindestens eine Waage mit einem Wägebehälter, Zufuhreinrichtungen für mindestens zwei verschiedene, miteinander zu vermischende Komponenten und eine Austragseinrichtung an dem Wägebehälter.

Derartige gravimetrisch arbeitende Dosierverfahren und -vorrichtungen sind im Stand der Technik allgemein bekannt. Dabei werden üblicherweise die einzelnen Komponenten nacheinander in einen Wägebehälter eingefüllt und nach dem Abwiegen aus diesem ausgetragen und in einen Mischbehälter eingefüllt. Gegebenenfalls kann auch der Wägebehälter selbst als Mischbehälter ausgebildet sein, so daß die einzelnen Komponenten kumulativ in den Wägebehälter eingegeben und anschließend miteinander vermischt werden.

Es gibt jedoch schwierige Misch- und Dosieraufgaben, beispielsweise solche, bei welchen mindestens eine der zu dosierenden und zu vermischenden Komponenten von den übrigen Komponenten stark abweichende physikalische Eigenschaften hat. Dies trifft beispielsweise für Fasern oder faserartiges Material zu, die mit einer Flüssigkeit, einem Pulver oder einem Brei vermischt werden sollen. Schon beim Dosieren ergibt sich insbesondere bei sehr leichten und locker geschichteten Fasern das Problem, daß diese keinerlei Neigung zeigen, in dem im allgemeinen trichterförmig in Richtung auf eine Entleeröffnung zulaufenden Wägebehälter nach unten und durch die Entleeröffnung zu rutschen. Vielmehr bilden derart locker geschichtete Fasem oft einen zwar relativ losen aber dennoch für die Fasern ausreichend haltbaren Verbund miteinander und bilden so einen der Behälterform angepaßten "Block" aus Fasern oder zumindest zusammenhängende Brücken in dem Behälter, die sich nur sehr schwer und oftmals nur durch manuelle Unterstützung aus dem Dosierbehälter entfernen lassen. Auch das Einmischen derartiger Fasern in andersartige Komponenten und die gleichmäßige Durchmischung der entsprechenden Komponenten ist oftmals sehr schwierig.

Die vorliegende Erfindung will hier Abhilfe schaffen, indem sie ein Verfahren und eine Vorrichtung bereitstellt, mit welchen es möglich ist, auch schwierig zu vermischende Komponenten in genauer Dosierung gleichmäßig und ohne übermäßig lange Mischvorgänge miteinander zu vermengen.

Hinsichtlich des Verfahrens wird diese Aufgabe dadurch gelöst, daß eine erste Komponente in einen ersten Wägebehälter gegeben wird, daß eine zweite Komponente während eines vorgebbaren Zeitraums kontinuierlich in einen zweiten Wägebehälter gegeben wird, während gleichzeitig die erste Komponente aus dem ersten Wagebehälter kontinuierlich in den zweiten Wägebehälter überführt wird, welcher die Summe der Gewichte der ersten und zweiten Komponente erfaßt, wobei sich aus der Gewichtsabnahme des Inhalts des ersten Wägebehälters und der Summe der beiden Komponenten in dem zweiten Wägebehälter der relative Anteil der ersten und zweiten Komponente ergibt. Es versteht sich, daß damit der relative Anteil der ersten und zweiten Komponente entsprechend einer vorgegebenen Rezeptur gezielt eingestellt wird, indem die Zufuhr der einen oder anderen Komponente gedrosselt oder beschleunigt wird, je nachdem wie sich die Gewichtsabnahme in dem ersten Wägebehälter und die Gewichtszunahme in dem zweiten Behälter entwickelt.

Hinsichtlich der Vorrichtung wird die der Erfindung zugrundeliegende Aufgabe dadurch gelöst, daß zwei Wägebehälter vorgesehen sind, von denen einer mit einer Austragseinrichtung versehen ist, die in den anderen Wägebehälter mündet und die gleichzeitig als Dosiereinrichtung ausgebildet ist, wobei auch die weitere Zufuhreinrichtung für den zweiten Wägebehälter als Dosiereinrichtung ausgebildet ist.

Wegen der mit der erfindungsgemäßen Vorrichtung möglichen und nach dem beanspruchten Verfahren auch praktisch verwirklichten, im wesentlichen gleichzeitigen Zufuhr beider Komponenten in einen gemeinsamen Behälter, erfolgt die Durchmischung in dem zweiten Wagebehälter schon während der Zugabe beider Komponenten und zwar auf sehr gleichmäßige Weise, wenn die Dosiermengen entsprechend den relativen Anteilen der Komponenten kontinuierlich anhand der Gewichtsabnahme des ersten Wägebehälters und der Gewichtszunahme des zweiten Wägebehälters angepaßt werden. Damit wird der spätere, eigentliche Mischvorgang der Komponenten beträchtlich verkürzt, weil eine im wesentlichen gleichmäßige Mischung zumindest zweier Komponenten bereits vorliegt, von denen eine eine ansonsten relativ schwierig einzumischende Komponente ist. Es versteht sich, daß der Begriff "kontinuierlicher Zufuhr" im Sinne der vorliegenden Erfindung auch eine intermittiernde, kurzzeitig unterbrochene, gleichzeitige oder abwechselnde Zufuhr der Komponenten in den zweiten Wägebehälter umfaßt, solange allein durch diese Art der Zufuhr bereits eine gewisse Durchmischung bzw. Vormischung der Komponenten erfolgt.

Hinsichtlich des Problems der Brückenbildung und des Austrags von Fasern und ähnlichem problematischen Material ergibt sich der Vorteil, daß entweder der erste Wägebehälter speziell für den Austrag derartiger schwieriger Materialien ausgestattet sein kann, oder aber daß diese Komponente als zweite Komponente direkt in den zweiten Wägebehälter eingegeben wird, während die Durchmischung automatisch durch die gleichzeitige Zugabe der ersten Komponente aus dem ersten Wägebehälter erfolgt.

Vorteilhaft ist es, wenn die Gewichtsabnahme des ersten Wägebehälters bzw. dessen Inhaltes und die Gewichtszunahme des zweiten Wägebehälters bzw. dessen Inhaltes kontinuierlich über einen Soll-/Istwertvergleich ermittelt werden, indem beispielsweise das Gewicht in festen, kurzen Zeitabständen gemessen und daraus die Gewichtsänderung pro Zeiteinheit abgeleitet wird, deren Wert dann dem Soll-/Istwertvergleich unterzogen wird.

Die beiden Komponenten müssen nicht notwendigerweise kontinuierlich gleichzeitig in den zweiten Wägebehälter eingegeben werden, sondern es ist stattdessen mit ähnlicher Wirkung auch möglich, jeweils kleinere Teilmengen der ersten und zweiten Komponente abwechselnd in den zweiten Wägebehälter zu geben und damit diese Komponenten sozusagen in dünnen Schichten übereinander anzuordnen, was eine anschließende Durchmischung ebenfalls beträchtlich erleichtert und beschleunigt gegenüber einer vollständig getrennten Zugabe beider Komponenten.

Daneben kann im Wechsel mit der zweiten Komponente auch eine dritte Komponente in den zweiten Wägebehälter eingegeben werden, wenn man mehr als zwei Komponenten schon durch die Zugabe in den zweiten Wägebehälter miteinander vermischen will. In analoger Weise kann man dieses Verfahren auch auf mehr als drei (n) Komponenten ausdehnen. Dabei sollten jedoch jeweils nur kleine Teilmengen der zweiten bis n'ten Komponente zudosiert werden, so daß der Wechsel zwischen diesen Komponenten relativ schnell erfolgt und die zu durchmischenden Schichten relativ dicht aufeinanderfolgen.

Weiterhin kann es vorteilhaft sein, wenn eine der Komponenten mit einem gewissen zeitlichen Vorlauf zuerst in den zweiten Wägebehälter eingefüllt wird, bevor das gleichzeitige Befüllen mit der anderen Komponente beginnt, wobei außerdem noch ein zeitlicher Nachlauf der einen oder anderen Komponente vorgesehen sein kann.

Soll beispielsweise ein Pulver oder feinkörniges Material mit Fasern gemischt werden, so ist es denkbar, daß ein Vortauf des Einfüllens der Fasern sinnvoll ist, weil anschließend gemeinsam mit den Fasern eingefülltes, feinkörniges oder pulvriges Material ohnehin zwischen den Faserzwischenräumen nach unten sinkt und sich mit der zuunterst liegenden Faserschicht vermischt, wobei dieses Material in höheren Faserschichten fehlt, so daß zum Abschluß auch ein Nachlauf der Füllung mit feinkörnigem Material zweckmäßig sein kann. Bei anderen Mischungen mag es sinnvoll sein, daß die eine Komponente von der Oberseite und Unterseite her durch die andere Komponente eingeschlossen wird, so daß also dieselbe Komponente einen entsprechenden Vorlauf und Nachlauf erhält, wobei selbstverständlich die zugeführte Gesamtmenge und die relativen Anteile der Komponenten der gewünschten Rezeptur entsprechen müssen.

Zweckmäßig ist eine Ausführungsform der erfindungsgemäßen Vorrichtung, bei welcher die beiden Wägebehälter übereinander angeordnet sind, d.h. bei welcher der erste Wägebehälter über dem zweiten Wägebehälter angeordnet ist, so daß eine Austragsöffnung am Boden des ersten Wägebehälters unmittelbar in eine entsprechende Zufuhröffnung am Deckel des darunterliegenden zweiten Wägebehälters münden kann. Dabei sollten jedoch die Austragsöffnung des ersten Wägebehälters und die entsprechende Zufuhröffnung des zweiten Wägebehälters über einen flexiblen Balg miteinander verbunden sein, damit von dem ersten Wägebehälter keine Kräfte auf den zweiten Wägebehälter bzw. auf dessen Deckel übertragen werden, was das Wägeergebnis an beiden Behältern verfälschen könnte.

Je nach der Art der Komponente, die in den ersten Wägebehälter eingegeben werden soll, kann dieser als Austragseinrichtung eine Zellradschleuse oder eine spezielle Zwangsaustragseinrichtung für Schüttgut aufweisen, welches eine Tendenz zur Brückenbildung hat. In letzterem Falle ist in der bevorzugten Ausfühfungsform der Erfindung der Wägebehälter mit relativ steil verlaufenden, vorzugsweise parallelen Wänden, z.B. nach Art eines zylindrischen Silos oder dergleichen ausgebildet und hat eine entsprechende Zwangsaustragseinrichtung, welche einen erheblichen Teil des Volumens oder Querschnittes des Behälters erfaßt. Selbstverständlich können auch andere Austragsvorrichtungen wie Vibrorinnen, Schnecken etc. anstelle von Zellradschleusen Verwendung finden.

Neben der Zufuhröffnung vom ersten in den zweiten Wagebehälter hat der zweite Wägebehälter selbstverständlich noch eine Zufuhröffnung für die zweite Komponente und in der bevorzugten Ausführungsform auch mindestens eine weitere oder auch mehrere weitere Zufuhröffnungen für eine dritte oder weitere Komponenten. Zweckmäßig ist es außerdem, wenn die Zufuhröffnungen für zwei gleichzeitig in den zweiten Wägebehälter einzugebende Komponenten relativ dicht beeinanderliegen und wenn außerdem die Zufuhröffnungen am Deckel oder zumindest im oberen Randbereich des zweiten Wägebehälters angeordnet sind. Der Abstand der Zufuhröffnungen für gleichzeitig einzugebende Komponenten sollte dabei vorzugsweise kleiner sein als der Radius des Deckels des Behälters. Außerdem sollten zum Beispiel alle Zufuhreinrichtungen jeweils nur über einen flexiblen Balg mit der entsprechenden Zufuhröffnung am Deckel des Behälters angeordnet sein, um keine Kräfte auf den zweiten Wägebehälter zu übertragen. Wahlweise kann jedoch auch der gesamte Deckel an den Zufuhreinrichtungen für die zweite, dritte und weitere Komponenten aufgehängt werden und seinerseits über einen flexiblen Balg oder eine lose Führung mit dem zweiten Wägebehälter verbunden sein. Dabei erfolgt allerdings die Verbindung zwischen dem Deckel und der Austragsöffnung des ersten Wägebehälters ebenfalls über einen flexiblen Balg, da auch auf den ersten Wägebehälter von dem Deckel und den Zufuhreinrichtungen her keine Kräfte übertragen werden dürfen, um dessen Wägeergebnis nicht zu verfälschen.

Bevorzugt ist eine Ausführungsform der Vorrichtung, bei welcher eine Steuereinrichtung für die verschiedenen Zufuhreinrichtungen der einzelnen Komponenten bzw. für die Austragseinrichtung des ersten Wägebehälters vorgesehen ist. Eine solche Steuereinrichtung ermöglicht eine Vorprogrammierung einer gewünschten Rezeptur und die entsprechende Steuerung aller Zufuhreinrichtungen zu dem zweiten Wägebehälter unter Ansprechen auf die von den Wägeelementen der ersten und zweiten Wägebehälter gelieferten Meßergebnisse.

Weitere Vorteile, Merkmale und Anwendungsmöglichkeiten der vorliegenden Erfindung werden deutlich anhand der folgenden Beschreibung bevorzugter Ausgestaltungen und der dazugehörigen Figuren. Es zeigen:
- Figur 1: schematisch eine Anlage zum Vermischen verschiedener Komponenten mit einem speziell auf schwierig zu dosierende Komponenten abgestimmten, ersten Wägebehälter,
- Figur 2: ein Zeitschema eines Dosiervorganges für zwei Komponenten mit einer Wiedergabe der Signale des ersten und zweiten Wägebehälters und
- Figur 3: eine schematische Darstellung der erfindungsgemäßen Vorrichtung in ihrer einfachsten, grundsätzlichen Ausgestaltung.

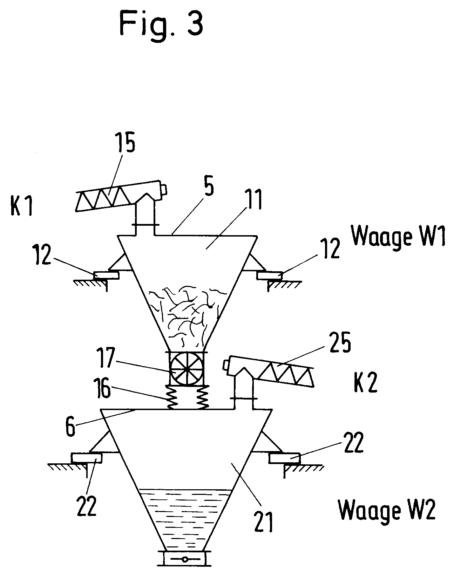

Es wird zunächst auf die Figur 3 Bezug genommen, an welcher die Grundprinzipien der vorliegenden Erfindung in der einfachsten Variante zu erläutern sind.

Man erkennt in Figur 3 oben einen Wägebehälter 11, der auf Wägemeßzellen 12 gelagert ist, welche z.B. Dehnungsmeßstreifen aufweisen. Eine Zufuhreinrichtung 15, dargestellt in Form einer Förderschnecke, ist für eine Komponente K1 am Deckel des Wägebehälters 11 vorgesehen. Nicht dargestellt ist die Kraftabkopplung zwischen der Zufuhreinrichtung 15 und dem Deckel 5 des Behälters 11, z.B. in Form eines Balges in dem Anschlußstutzen der Zufuhreinrichtung 10 oder aber in Form eines Balges zwischen Deckel 5 und Behälter 11.

Am Boden des trichterförmigen Behälters 11 ist eine Austrags- und Dosiereinrichtung in Form einer Zellradschleuse vorgesehen, deren Drehgeschwindigkeit steuerbar ist, um die Dosiermengen bzw. -geschwindigkeiten variieren zu können. Der Ausgang der Zellradschleuse 17 ist wiederum über einen Balg 16 mit dem Deckel 6 des zweiten Wägebehälters 21 verbunden. Auch hier ist wiederum die Kraftabkopplung zwischen der Zufuhreinrichtung 25 für die zweite Komponente K2 und dem Wägebehälter 21 nicht explizit dargestellt, sollte aber analog zu dem oberen Wägebehälter 11 entweder zwischen dem Anschlußstutzen der Zufuhreinrichtung 25 und dem Deckel 6 oder aber zwischen dem Deckel 6 und dem Rand des Behälters 21 vorgesehen sein. Letzteres ist zu bevorzugen, wenn eine größere Anzahl von Zufuhreinrichtungen am Deckel 6 vorgesehen ist.

Der Ablauf eines Dosier- und Mischungsvorganges ist derart, daß zunächst über die Zufuhreinrichtung 15 der Wägebehälter 11 mit einer ersten Komponente K1 in einer vorgebbaren Menge gefüllt wird, welche sich aus der Differenz des mit den Wägezellen 12 erfaßten Gewichtes des Wägebehälters 11 vor und nach der Befüllung mit der Komponente K1 ergibt.

Abgesehen von einem etwaigen Vorlauf für eine der beiden Komponenten K1, K2 erfolgt anschließend die gleichzeitige Befüllung des Wägebehälters 21 durch die Zufuhreinrichtung 25 für die Komponente K2 und aus dem Behälter 11 mit Hilfe der Zellradschleuse 17 für die Komponente K1. Die Zufuhröffnungen für die Komponenten K1, K2 am Deckel 6 des Behälters 21 sind relativ dicht nebeneinander angeordnet, so daß diese beiden Komponenten beim Herabfallen in den Behälter 21 bereits relativ gut durchmischt werden. Falls gewünscht, könnten auch entsprechende Leitbleche oder dergleichen unterhalb der Zufuhröffnungen am Deckel 6 vorgesehen sein, die eine Durchmischung sicherstellen. Dabei kann beispielsweise die Komponente K2 eine nur schwierig einzumischende Komponente sein, deren gleichmäßige Durchmischung mit der Komponente K1 jedoch durch das gleichzeitige Einfüllen in den Wagebehälter 21 sichergestellt wird. Es versteht sich, daß man dabei die Komponente K1 nach Möglichkeit so auswählt, daß sie sich von allen in Frage kommenden sonstigen, gegebenenfalls später noch beizugebenden Komponenten durch die gleichzeitige Eingabe in den Behälter 21 noch am besten mit der Komponente K2 vermischt. So wäre es beispielsweise vorzuziehen, schwierig zu vermischende, lange glatte Fasern gleichzeitig zusammen mit einem etwas grobkörnigen Material einzufüllen, anstelle eines feinkörnigen, sandartigen Materials, das zwischen den glatten Fasern hindurchrieseln und sich am Boden des Behälters W2 ansammeln würde, falls man die Wahl zwischen derart verschiedenen Komponenten hat.

Während des gleichzeitigen Befüllens des Wägebehälters 2 wird über die Wägezellen 12 und 22 kontinuierlich das sich ändernde Gewicht sowohl des Wägebehälters 11 als auch des Wägebehälters 21 erfaßt. Auf diese Weise ist es möglich, anhand der Gewichtsabnahme des Wagebehälters 11 und der gesamten Gewichtszunahme des Wägebehälters 22 aus der Differenz dieser beiden Zahlenwerte auch das Gewicht der zugeführten Komponente K2 zu ermitteln, so daß man sowohl die relativen als auch die absoluten Anteile der Komponenten K1 und K2 in der im Wägebehälter 21 vorhandenen Mischung kennt und gegebenenfalls durch Anpassung der Zuführraten über die Zellradschleuse 17 oder die Zufuhreinrichtung 25 in Richtung auf eine gewünschte Rezeptur ändern kann, falls die gemessenen Istwerte von den Sollwerten abweichen.

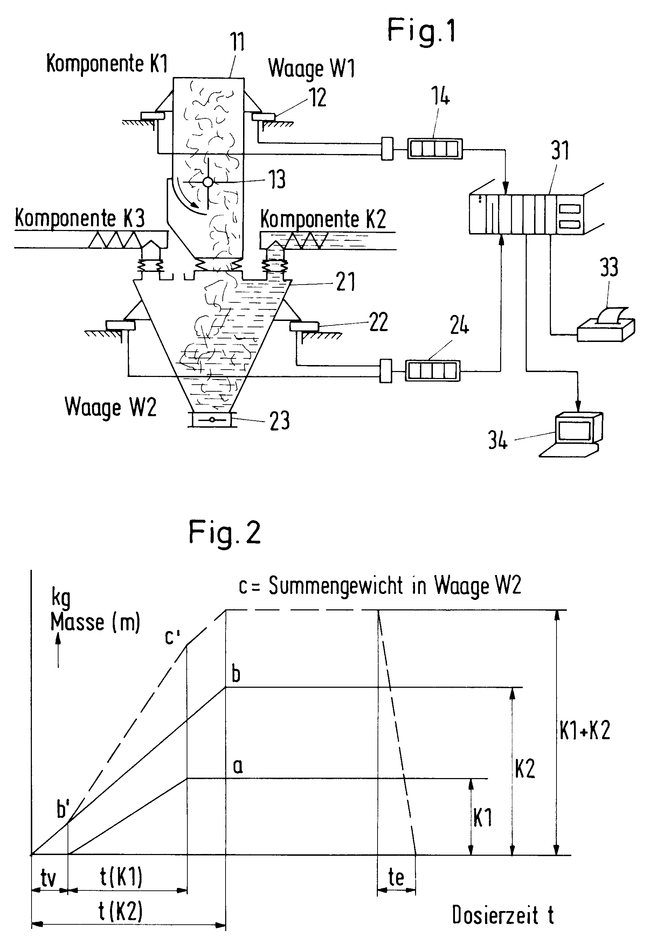

In Figur 1 ist eine entsprechende Anlage dargestellt, welche auch die Komponenten für die Meßwerterfassung, Auswertung und Steuerung schematisch zeigt. Der grundsätzliche Aufbau ist ähnlich dem in Figur 3 dargestellten Aufbau, nämlich mit einem oberen Wägebehälter 11 und einem unteren Wägebehälter 21, die über einen flexiblen Balg im wesentlichen ohne wechselseitige Kraftübertragung miteinander verbunden sind. Die Meßzellen 12, 22 weisen vorzugsweise Dehnungsmeßstreifen auf, welche bereits bei sehr geringen elastischen Verformungen der Wägemeßzellen 12, 22 ein relativ großes Spannungssignal liefern, so daß sich Gewichtsänderungen sehr genau bei nur äußerst geringen vertikalen Bewegungen der Behälter 11, 21 erfassen lassen. Meßverstärker 14 und 24 geben die von den Meßzellen 12, 22 erfaßten und verstärkten Meßwerte an eine Steuer- und Kontrolleinrichtung 31 weiter. Eine solche Steuer- und Kontrolleinrichtung kann ein Mikrocontroller, ein PC oder aber ein fest programmierter Baustein sein. Bevorzugt wird eine Steuereinrichtung 31, die über ein Dateneingabegerät oder Terminal 34 programmierbar und steuerbar ist.

Über das Terminal 34 wird beispielsweise eingegeben, welche Gesamtmenge der Komponente K1 in den Wägebehälter 11 eingegeben werden soll, in welchem Verhältnis die Komponenten K1 und K2 (gegebenenfalls auch zusätzlich eine Komponente K3) gemischt und in den Wägebehälter 21 eingegeben werden sollen. Desgleichen kann eingegeben werden, mit welcher Geschwindigkeit die Eingabe der Komponenten K1, K2 in den Wägebehälter 21 erfolgen soll und welche Gesamtmenge bzw. -masse der Mischung schließlich in dem Behälter 21 vorhanden sein soll, wobei es sich von selbst versteht, daß der Anteil der Komponente K1 in dieser Gesamtmenge nicht größer sein kann, als das was zuvor in dem Behälter 11 vorhanden war. Die Steuereinrichtung 31 ist deshalb so programmiert, daß sie entsprechende Eingabewerte überprüft und eine Rückmeldung abgibt, falls irgendwelche Widersprüche auftauchen oder eine bestimmte Rezeptur mit einer bestimmten Gesamtmenge aufgrund der im übrigen eingegebenen Parameter nicht zu erreichen ist.

Nachdem alle erforderlichen Parameter eingegeben und überprüft worden sind, kann ein entsprechender Ausdruck über einen Drucker 33 erfolgen und die Anlage wird entsprechend einer zeitlichen Vorgabe oder durch einen unmittelbaren Befehl am Terminal 34 gestartet. Die Steuereinrichtung erfaßt dann zunächst die Signale der Wägezellen 12 und identifiziert diese mit einem Netto-Nullgewicht. Anschließend steuert die Steuereinrichtung die nicht dargestellte Zufuhreinrichtung für die Komponente K1 an, so daß der Behälter 11 zunächst mit der Komponente K1 gefüllt wird. Es ist selbstverständlich auch möglich, daß der Wägebehälter manuell mit der Komponente K1 beschickt und diese Beschickung z. B. durch Tastendruck quittiert wird, wodurch die Steuereinrichtung 31 das vorhandene Istgewicht als weitere Grundlage verwendet. Die Austragseinrichtung 13 bleibt dabei zunächst außer Betrieb. Gegebenenfalls kann eine Austragsöffnung des Behälters 11 auch durch einen nicht dargestellten Schieber verschlossen sein. Während des Befüllens des Behälters 11 erfaßt die Steuereinrichtung 31 kontinuierlich die von den Wägezellen 12 erfaßten Meßwerte und stoppt den Füllvorgang, sobald die Wägezellen 12 ein Signalniveau erreicht haben, welches der eingegebenen bzw. einprogrammierten Gesamtmenge der Komponente K1 in dem Behälter 11 entspricht. Der folgende Durchmischungs- und Füllvorgang im Behälter 21 soll anhand des Diagrammes der Figur 2 erläutert werden, wobei es sich versteht, daß auch Abweichungen hiervon möglich sind. Die Kurve b in Figur 2 repräsentiert die Gesamtmasse der jeweils in den Behälter 21 eingefüllten Komponente K2, während die Kurve a die Gesamtmasse der in den Behälter 21 eingefüllten Komponente K1 repräsentiert, die allerdings meßtechnisch als Gewichtsabnahme des Behälters 11 erfaßt wird. Die Kurve c, die während einer Anfangszeit tᵥ mit der Kurve b zusammenfällt und im übrigen gestrichelt dargestellt ist, gibt das durch die Signale der Wägezellen 22 erfaßte Gesamtnettogewicht der Komponenten K1 und K2 in dem Wägebehälter 21 wieder. Die Kurve b entspricht deshalb für Zeiten größer als tᵥ nicht einem unmittelbar gemessenen Wert, sondern der Differenz der unmittelbar gemessenen Kurven c und a, wobei letztere reziprok, d.h. als Gewichtsabnahme des Behälters 11 gemessen wird.

Wie aus der vorstehenden Beschreibung bereits hervorgeht, ist im Diagramm der Figur 2 in vertikaler Richtung die Masse der jeweiligen Komponenten und ihrer Summe über der Zeit aufgetragen, welche der horizontalen Achse entspricht.

Wie bereits erwähnt, wird also durch die Steuereinrichtung 31 zunächst die Zufuhreinrichtung 25 angesteuert, so daß während einer kurzen Vorlaufzeit tᵥ ausschließlich die Komponente K2 in den Wägebehälter 21 eingefüllt wird. Dies entspricht dem Anfangsabschnitt der Kurve b, die bis zum Punkt b' mit der Kurve c zusammenfällt. Nach der Zeit tᵥ wird durch die Steuereinrichtung 31 auch die Austragsvorrichtung 13 in Betrieb gesetzt, so daß nunmehr aus dem Behälter 11 auch die Komponente K1 in den Behälter 21 eingefüllt wird und zwar gleichzeitig mit der Komponente K2. Der Signalverlauf der Wägezellen 22 über der Zeit entspricht nun der gestrichelten Kurve c. Solange gleichzeitig die Komponenten K2 und K1 mit kontinuierlicher Geschwindigkeit zugeführt werden, steigt die Kurve c entsprechend steil an, d.h. ihre Steigung ergibt sich aus der Summe der Steigungen der Kurven a und b in diesem Bereich zwischen den Punkten b' und c'. Die Massenzufuhr der beiden Komponenten K2 und K1 wird dabei von der Steuereinrichtung 31 entsprechend einem vorgegebenen oder speziell ausgewählten Programm so eingestellt, daß nach einem Zeitabschnitt, der in dem Diagramm mit t(K1) gekennzeichnet ist, die der vorgesehenen Rezeptur und Gesamtmenge der Mischung entsprechende Gesamtmenge der Komponente K1 in den Behälter 21 eingefüllt worden ist. Daher wird nach Ablauf dieses Zeitabschnittes und nachdem die Wägezellen 12 ein dieser Menge entsprechendes Signal anzeigen, die Austragsvorrichtung 13 durch die Steuereinrichtung 31 gestoppt und damit die weitere Zufuhr der Komponente K1 in den Behälter 21 unterbunden. Dabei ist nach dem Diagramm in Figur 2 die Zufuhrgeschwindigkeit für die Komponente K2 so bemessen worden, daß diese zu diesem Zeitpunkt noch nicht in einer der Gesamtmenge der Komponente K1 bzw. der Rezeptur entsprechenden Menge zugeführt worden ist. Entsprechend den Kurven c und b wird also die Zufuhr der Komponente K2 über die Zufuhreinrichtung 25 bis zu einem Zeitpunkt fortgesetzt, der auf der horizontalen Achse mit t(K2) gekennzeichnet ist. Zu diesem Zeitpunkt wird auch die Zufuhr der Komponente K2 gestoppt, so daß sich nunmehr die Gesamtmasse in dem Wägebehälter 21 nicht mehr ändert, was durch die horizontal verlaufenden Kurven a, b und c zum Ausdruck kommt. Falls gewünscht, kann nunmehr in dem Wägebehälter 21 noch eine weitere Durchmischung mit Hilfe mechanischer Mischelemente erfolgen. Ansonsten wird nach einer gewissen Zeit während eines Zeitabschnittes te die Mischung über eine Austragseinrichtung oder Klappe 23 am unteren Ende des Behälters 21 abgelassen. Die während des Zeitabschnittes te steil abfallende gestrichelte Kurve c entspricht dem Verlauf der Meßsignale der Wägezellen 22.

Die Istwerte der Meßzellen 12 und 22 können nach entsprechender Umrechnung in Massewerte graphisch aufgetragen werden, um den Istverlauf der Kurven a und c wiederzugeben, wobei die Kurve b aus der Differenz der Kurven c und a errechnet werden kann.

Der gesamte Ablauf kann als Zahlenkolonnenausdruck oder Graphik über einen Drucker 33 als Mischungsprotokoll ausgegeben werden.

Mit dem erfindungsgemäßen Verfahren und einer entsprechenden Vorrichtung ist es möglich, in relativ kurzer Zeit und sehr effektiv Mischungen aus Komponenten herzustellen, die bisher nur sehr schwierig und mit größerem Aufwand und Energieeinsatz zu vermischen waren.

## Patentansprüche

1. Verfahren zur gravimetrischen Dosierung und Vermischung mindestens zweier Komponenten (K1, K2), bei welchem die Gewichtsanteile der Komponenten (K1, K2) durch Wägen erfaßt und beide Komponenten (K1, K2) in einem Behälter (21) miteinander vermischt werden, dadurch gekennzeichnet, daß eine erste Komponente (K1) in einen ersten Wägebehälter (11) gegeben wird, daß eine zweite Komponente während eines vorgebbaren Zeitraumes kontinuierlich in einen zweiten Wägebehälter (21) gegeben wird, während zumindest abschnittsweise gleichzeitig die erste Komponente (K1) aus dem ersten Wägebehälter (11) kontinuierlich in den zweiten Wägebehälter (21) überführt wird, welcher die Summe der Gewichte der ersten und der zweiten Komponenten (K1, K2) aufnimmt, wobei sich aus der Gewichtsabnahme des Inhalts des ersten Wägebehälters (11) und der Summe der Gewichte der beiden Komponenten (K1, K2) in dem zweiten Wägebehälter (21) die relativen Anteile der ersten und zweiten Komponenten (K1, K2) in dem zweiten Wägebehälter (21) ergeben.

2. Verfahren nach Anspruch 1, dadurch gekennzeichnet, daß die Gewichtsabnahme des Inhaltes des ersten Wägebehälters (11) und die Gewichtszunahme des Inhaltes des zweiten Wägebehälters (21) kontinuierlich über einen Soll-/Istwertvergleich gesteuert werden.

3. Verfahren nach Anspruch 1 oder 2, dadurch gekennzeichnet, daß die erste und zweite Komponente (K1, K2) in kurzen Abschnitten abwechselnd in den zweiten Wägebehälter (21) gegeben werden.

4. Verfahren nach einem der Ansprüche 1 bis 3, dadurch gekennzeichnet, daß eine dritte Komponente (K3) abwechselnd mit der zweiten Komponente (K2) in den zweiten Wägebehälter (21) eingegeben wird.

5. Verfahren nach einem der Ansprüche 1 bis 4, dadurch gekennzeichnet, daß das Einfüllen derart erfolgt, daß der Zeitabschnitt für das Einfüllen einer der Komponenten (K1, K2) den Zeitabschnitt für das Einfüllen der anderen Komponente (K2, K1) mit einem Vorlauf (tᵥ) und/oder einem Nachlauf (tₙ) überdeckt.

6. Vorrichtung zur gravimetrischen Dosierung und Vermischung mindestens zweier Komponenten, mit mindestens einer Waage mit mindestens einem Wägebehälter (11), Zufuhreinrichtungen (15, 25) für mindestens zwei verschiedene, miteinander zu vermischende Komponenten (K1, K2) und einer Austragseinrichtung (13) an dem Wägebehälter (11), dadurch gekennzeichnet, daß zwei Wägebehälter (11,21) vorgesehen sind, von denen einer mit einer Austragseinrichtung (13) versehen ist, die dem anderen Wägebehälter (21) die Komponente (K1) aus dem ersten Wägebehälter zuführt und die als Dosiereinrichtung ausgebildet ist, wobei auch die weitere Zufuhreinrichtung (25) für den zweiten Wägebehälter (21) als Dosiereinrichtung ausgebildet ist.

7. Vorrichtung nach Anspruch 6, dadurch gekennzeichnet, daß der erste Wägebehälter (11) über dem zweiten Wägebehälter (21) angeordnet ist.

8. Vorrichtung nach Anspruch 7, dadurch gekennzeichnet, daß die Austrittsöffnung des ersten Wägebehälters (11) mit einer Zufuhröffnung des zweiten Wägebehälters (21) über einen flexiblen Balg (16) verbunden ist.

9. Vorrichtung nach Anspruch 7 oder 8, dadurch gekennzeichnet, daß die Austragsvorrichtung des oberen Behälters als Zellradschleuse (17) ausgebildet ist.

10. Vorrichtung nach einem der Ansprüche 6 bis 9, dadurch gekennzeichnet, daß eine Zufuhreinrichtung (35) für eine dritte Komponente (K3) an dem zweiten Wägebehälter (21) vorgesehen ist.

11. Vorrichtung nach einem der Ansprüche 6 bis 10, dadurch gekennzeichnet, daß eine Steuereinrichtung (31) für die Steuerung der Zufuhr der Komponenten (K1, K2, K3) zu dem zweiten Wägebehälter vorgesehen ist.

12. Vorrichtung nach einem der Ansprüche 6 bis 11, dadurch gekennzeichnet, daß eine Zwangsaustragsvorrichtung (13) für den Austrag der ersten Komponente (K1) aus dem ersten Wägebehälter (11) in den zweiten Wägebehälter (21) vorgesehen ist.
